# EUROPEAN PATENT SPECIFICATION

(11) **EP 4 273 082 B1**
(45) Date of publication and mention of the grant of the patent: **16.07.2025**
(21) Application number: 22207857.8
(22) Date of filing: 16.11.2022
(51) Int. Cl.: B66B 7/00, B66B 5/02, B66B 11/02, B66B 1/28

(54) **ELEVATOR SYSTEM AND METHOD TO CONTROL POWER OF THE ELEVATOR SYSTEM**
AUFZUGSANLAGE UND VERFAHREN ZUR STEUERUNG DER STROMVERSORGUNG DER AUFZUGSANLAGE
SYSTÈME D'ASCENSEUR ET MÉTHODE DE CONTRÔLE DE L'ALIMENTATION ÉLECTRIQUE DU SYSTÈME D'ASCENSEUR

(30) Priority: 05.05.2022 US 202217737927
(43) Date of publication of application: 08.11.2023
(73) Proprietor: Otis Elevator Company, Farmington CT 06032-2568 (US)
(72) Inventor: AUXIER, James Tilsley, Farmington, 06032 (US); ROBERTS, Randy, Farmington, 06032 (US)
(74) Representative: Dehns

(56) References cited:
- WO-A1-2016/016679
- CN-A- 113 415 699
- US-A1- 2019 047 816

## Description

### BACKGROUND

Elevator systems are useful for carrying passengers and items between different levels of a building. Elevator cars typically require electricity to power the lighting and ventilation for the elevator cab. The car operating panel is one example device typically situated within an elevator cab that has to communicate with other portions of the elevator system, such as a scheduler. Conventional elevator systems include a traveling cable that has one end connected with the elevator car to supply electrical power to the elevator car and to facilitate communications with the elevator car. Traveling cables are generally effective, however, they increase the material cost and weight associated with the elevator system.

CN 113 415 699 A discloses a method and device for replacing an elevator car battery. When it is detected that the elevator car is moving slowly, a detection starting signal is sent to a first battery grabber. After a first alignment completion signal returned by the first battery grabber based on the detection starting signal is received, the first alignment completion signal is sent to a main control system. The main control system executes elevator stopping and braking actions on the elevator car; and after it is determined that the elevator car has stopped, the battery grabber is controlled to execute a battery replacement operation.

US 2019/047816 A1 discloses an elevator installation that includes at least one car that is displaceable in an elevator shaft; a first supply unit for supplying the car with energy, material, and/or data; and an interchange arrangement for interchanging the first supply unit to the car whereby the first supply unit is removed from or attached to the car during ongoing operation of the elevator installation. The interchange arrangement may remove and/or attach one or more supply units from the car during a regular door-opening cycle where the car stops at a floor of a building in which the elevator installation is installed. A duration of time required to remove the first supply unit from the car, or alternatively add the first supply unit to the car, is less than a duration of time required for a regular door-opening cycle.

### SUMMARY

An elevator system according to claim 1 is provided.

A method according to claim 9 is also provided.

Optional features are defined in the dependent claims.

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system.
Figure 2 schematically illustrates selected features of the elevator system shown in Figure 1 from a side view.
Figure 3 schematically illustrates selected features of an elevator car power supply and an exchange station.
Figure 4 schematically illustrates another configuration of an elevator car.
Figure 5 schematically illustrates an arrangement of an elevator system including multiple vertical pathways and at least one horizontal oriented transition pathway.
Figure 6 schematically illustrates another elevator system configuration.

### DETAILED DESCRIPTION

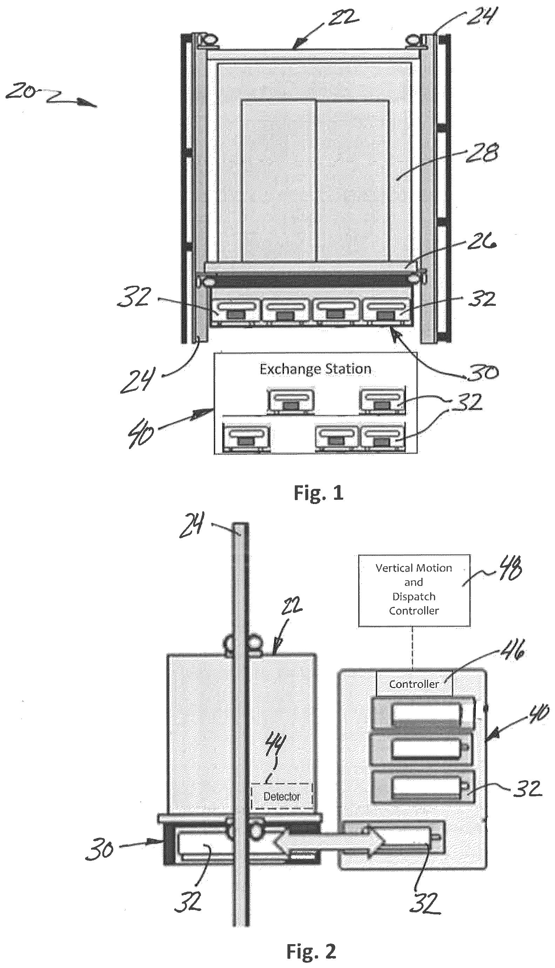

Figure 1 schematically illustrates selected portions of an elevator system 20. An elevator car 22 is situated to move along a vertical path, which may be in a hoistway, such as by following guiderails 24 The elevator car 22 includes a frame 26 and a cab 28 supported on the frame 26.

An elevator car power supply 30 is supported on the elevator car 22. The elevator car power supply 30 includes a plurality of power sources 32. Each power source 32 may comprise a rechargeable battery.

An exchange station 40 is situated near the path followed by the elevator car 22. The exchange station 40 is configured to remove a selected number of the power sources 32 from the elevator car power supply 30 when the elevator car 22 is situated in a position near the exchange station 40. The exchange station 40 removes power sources 32 that have a remaining capacity below a selected level or threshold. The exchange station 40 is also configured to replace each of the removed power sources 32 with a replacement power source 32 that has a capacity above the selected level. The exchange station 40 in the illustrated example includes the ability to recharge power sources 32 that have a diminished capacity so that the recharged power sources 32 can then be used to replace power sources 32 that are subsequently removed from the elevator car power supply 30.

As shown in Figure 2, a capacity detector 44 is situated to detect the capacity of each of the power sources 32 of the elevator car power supply 30. The capacity detector 44 in some examples detects the voltage or charge level of each of the power sources 32. The detector 44 may comprise a voltmeter. The capacity detector 44 provides an indication regarding the detected capacity of each of the power sources 32 to a controller 46.

The controller 46 in the illustrated example includes a computing device, such as a processor and memory associated with the processor. The controller 46 is configured, for example by programming, to perform removal and replacement operations to meet the needs of the particular elevator system in which it is being used. The exchange station 40 removes any number of the power sources 32 from the elevator car power supply 30 when such power sources 32 have a capacity below a preselected threshold level. Power sources 32 from the exchange station 40 that have a higher level of power above the selected threshold level replace those that were removed from the elevator car power supply 30.

The elevator system 20 includes a vertical motion and dispatching controller 48 that directs movement of the elevator car 22. The detector 44, controller 46, or both communicate with the controller 48 so the controller 48 can schedule an appropriate time for the elevator car 22 to reach and remain at the exchange station 40. The controller 48 is configured, for example, to direct the elevator car 22 to travel to the exchange station 40 as a scheduled stop. The controller 48 also receives information from the detector 44, controller 46, or both indicating the status of a power source exchange so the controller 48 will not issue a command for the elevator car 22 to travel to another position until the exchange procedure is complete.

Figure 2 schematically shows the detector 44 supported on the elevator car 22 and the controller 46 as part of the exchange station 40. In such an arrangement, wireless communications using a known communication protocol, such as Bluetooth, allows the controller 46 to obtain the indications from the detector 44 regarding the respective capacities or charge levels of the power sources 32. The respective positions of the detector 44 and the controller 46 in Figure 2 are shown for discussion purposes only. In other configurations, for example, a detector 44 is situated within the exchange station 40 and on board the elevator car 22. Additionally, the elevator car 22 may support some control electronics that are at least partially responsible for facilitating removing and replacing power sources 32 from the elevator car power supply 30.

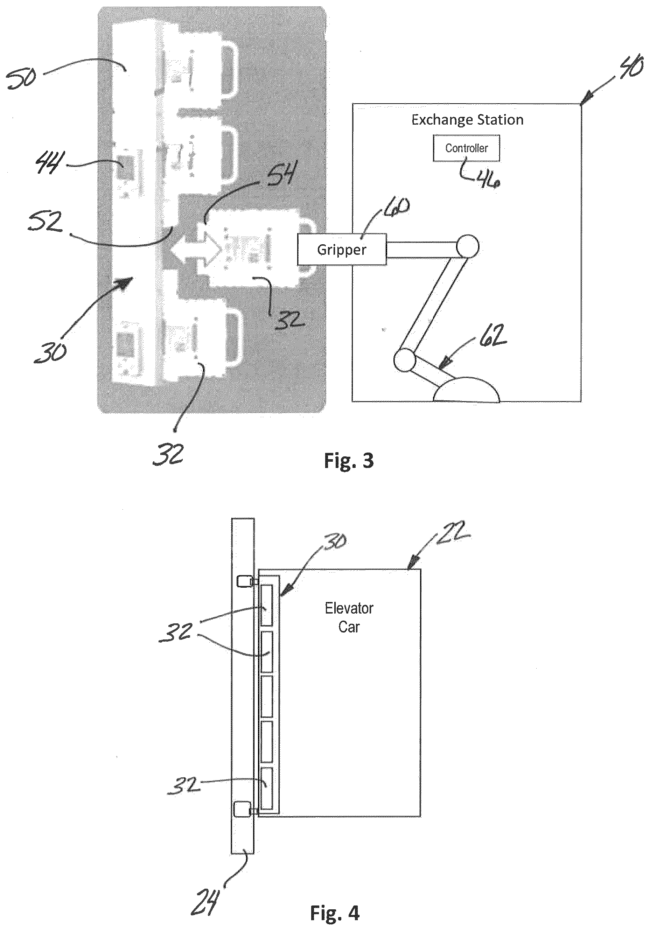

As can be appreciated from Figure 3, the example elevator car power supply 30 includes a rack 50 that supports the power sources 32. In this example, the rack 50 includes a plurality of compartments 52, such as slots, that at least partially receive a corresponding one of the power sources 32. Each compartment 52 in this example includes an electrical connector interface that establishes an electrically conductive connection with the power source 32 that is received by that compartment 52. The example power source 32 shown in Figure 3 includes a connector portion 54 for establishing that connection.

The rack 50 includes a retainer that secures the power sources 32 relative to their respective compartments 52 to maintain the electrically conductive connection with each power source 32. The retainer also establishes a physically secured connection so that the power sources 32 remain in a desired arrangement throughout movement of the elevator car 22.

At least one coupling device at the exchange station 40 includes a gripper 60 and an actuator 62 that moves the gripper 60 in an automated fashion based upon commands from the controller 46. The gripper 60 is configured to grasp a selected power source from the elevator car power supply 30, remove that power source 32 and place it into a location at the exchange station 40 where the power source 32 can be recharged. The gripper 60 also grasps a more highly charged power source 32 from the exchange station 40 to replace the power source 32 that has been removed from the rack 50. The coupling device and power source configurations may vary to meet the needs of a particular installation.

The example shown in Figures 1 and 2 includes the elevator car power supply 30 supported beneath the cab 28 of the elevator car 22. Another example arrangement is shown in Figure 4. In this example, the elevator car 22 includes an elevator car power supply 30 that is situated along one of the sides of the elevator car 22. Each of the example elevator cars includes a top, a bottom, and a plurality of sides extending between the top and bottom. In the example of Figure 4, the elevator car 22 is a cantilevered elevator car. The elevator car power supply 30 is situated along the side of the elevator car 22 that is closest to the structure, such as the guiderail 24, that supports the elevator car 22.

Other configurations include the power sources 32 of the elevator car supply 30 distributed among a plurality of sides of the elevator car. Those skilled in the art who have the benefit of this description will realize an appropriate arrangement and location for the power sources 32 to achieve a desired car configuration and balance to meet their particular needs.

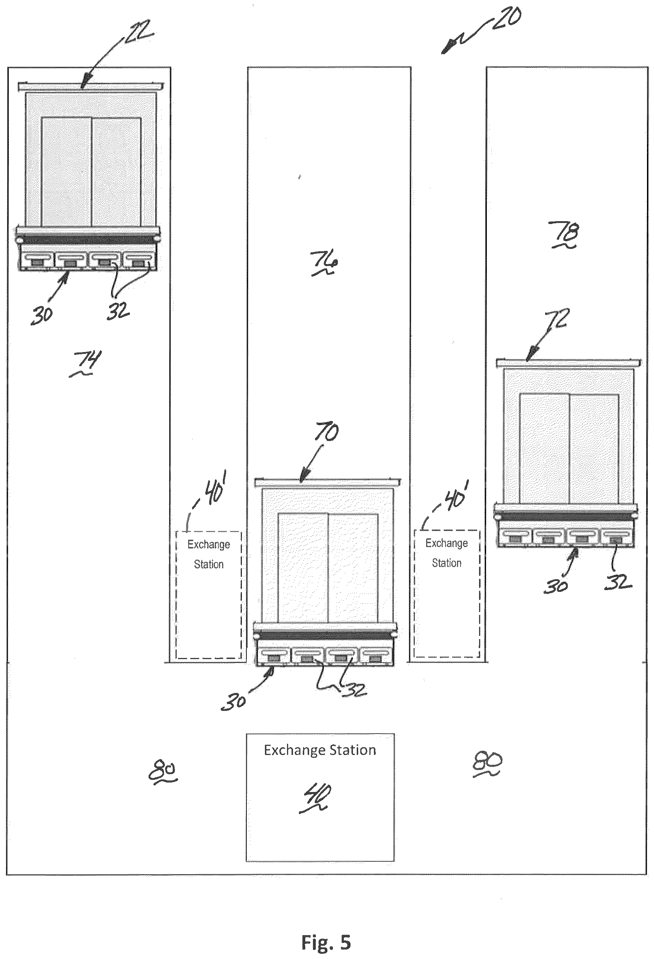

Figure 5 schematically illustrates an elevator system 20 that includes a plurality of elevator cars including the elevator car 22, a second elevator car 70, and a third elevator car 72. The elevator system 20 includes a plurality of vertical pathways 74, 76 and 78. Each of the elevator cars 22, 70 and 72 is capable of moving along each of the vertical pathways 74-78. A horizontally oriented transition path 80 facilitates movement of the elevator cars 22, 70, 72 among the vertical paths or hoistways 74-78.

In an embodiment like that shown in Figure 5, the exchange station 40 may be situated in or near the transition path 80 so that power sources 32 may be removed and replaced from the elevator car power supply 30 while that elevator car is in a corresponding position along the transition path 80. In such an embodiment, a single exchange station includes enough power sources 32 and charging capability to maintain adequate power supply for all of the elevator cars 22, 70, 72. Utilizing the transition path 80 for performing any power source exchange avoids interrupting use of an elevator car within one of the vertical paths 74-78.

Figure 5 also schematically shows exchange stations 40' between two of the vertical paths or hoistways 74, 76, 78. Assuming the elevator system was configured without the transition path 80 and each of the illustrated elevator cars 22, 70, 72 is dedicated to the corresponding hoistway or vertical path 74, 76, 78, the exchange stations 40' are situated to be able to service both elevator cars on either side of the exchange station.

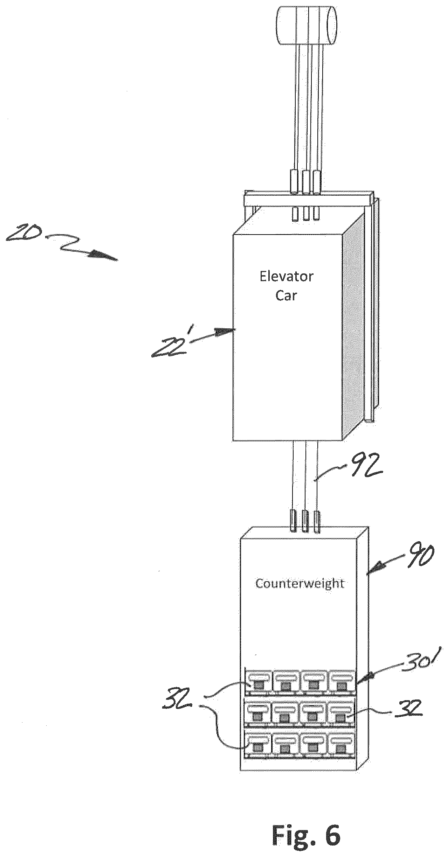

Figure 6 illustrates another example configuration of an elevator system. In this example, the elevator car 22' is coupled with a counterweight 90 by a load bearing assembly or roping 92. The elevator car power supply 30' in this example is situated on the counterweight 90. At least one electrically conductive member extends between the elevator car power supply 30' and the elevator car 22' to provide power to the elevator car 22'. In some configurations, the load bearing assembly 92 includes the electrically conductive member. One feature of the example shown in Figure 6 is that the mass of the elevator car power supply 30' contributes to the mass required for the counterweight 90 rather than adding to the mass of the elevator car 22'.

Disclosed configurations provide the ability to apply power to an elevator car without requiring a traveling cable. Utilizing multiple power sources that can individually be removed and replaced depending on their current capacity or charge level enhances various aspects of supplying power to an elevator car using a power supply that travels with the elevator car through a hoistway.

Individually and selectively removing and replacing power sources 32 provides the ability to maintain the overall power available from the elevator car power supply 30 above a selected minimum level without substantially interrupting the ability of the elevator car 22 to service passengers. Swapping out one or more of the power sources 32 can occur relatively quickly and in an automated fashion while the elevator car 22 is parked at a landing, for example.

Individually and selectively controlling when power sources 32 are removed and replaced also allows for the elevator car 22 to remain in service for extended periods of time provided that the power sources 32 on board the elevator car 22 (or counterweight in an example like that shown in Figure 6) have appropriate capacity to power the elevator car as needed.

Additionally, the useful life of the power sources 32, which may be lithium ion batteries for example, can be extended by maintaining the charge level of the power sources 32 below an upper threshold and above a minimum threshold. In other words, a shallow charging cycle for each power source 32 is possible when using multiple power sources 32 for the elevator car power supply 30 without removing the elevator car 22 from service for extended periods of time.

Additionally, having a plurality of power sources 32 allows for a mechanic or technician to more easily service the elevator car power supply 30 compared to an arrangement that has a single battery or power source.

The preceding description is exemplary rather than limiting in nature. Variations and modifications to the disclosed examples may become apparent to those skilled in the art that do not necessarily depart from the scope of the appended claims. The scope of legal protection given to this invention can only be determined by studying the following claims.

## Claims

1. An elevator system (20), comprising:
an elevator car (22, 22') that is configured for movement along a path;
an elevator car power supply (30, 30') supported for movement with the elevator car (22, 22'), the power supply (30, 30') including a plurality of power sources (32); and
an exchange station (40) near the path and configured to
remove, from the elevator car power supply (30, 30'), a selected number of the power sources (32) that have a capacity below a selected level and
replace each of the removed number of the power sources (32) with a replacement power source (32) having a capacity above the selected level;
**characterised in that**
the elevator system (20) further comprising:
a second elevator car (70); and
a second elevator car power supply (30, 30') supported for movement with the second elevator car (70), the second elevator car power supply (30, 30') including a plurality of power sources (32),
wherein
the exchange station (40) is configured to
remove, from the second elevator car power supply (30, 30'), a selected number of the power sources (32) that have a capacity below the selected level and
replace each of the removed number of the power sources (32) with a replacement power source (32) having a capacity above the selected level;
wherein the elevator system comprises a plurality of vertical paths (74, 76, 78) and at least one horizontal transition path (80) extending between the vertical paths (74, 76, 78), wherein
the elevator car power supply (30) is supported on the elevator car (22),
the second elevator car power supply (30) is supported on the second elevator car (70),
the elevator car (22) and the second elevator car (70) are each configured to move along the horizontal transition path (80), and
the exchange station (40) is in a location to remove and replace the selected number of power sources (32) while the elevator car (22) or the second elevator car (70) is at a corresponding location along the horizontal transition path (80).

2. The elevator system (20) of claim 1, wherein
the elevator car power supply (30, 30') includes a rack (50),
each of the power sources (32) is at least partially received by a compartment (52) of the rack (50), and
each compartment (52) includes an interface that is configured to establish an electrically conductive connection with the power source (32) received by the compartment (52); and, optionally, wherein:
each compartment (52) includes a retainer that is configured to secure the power source (32) relative to the compartment (52) to maintain the electrically conductive connection with the power source (32).

3. The elevator system (20) of claim 1 or 2, wherein the exchange station (40) includes at least one coupling device configured to
remove the selected number of power sources (32) that have the capacity below the selected level from the elevator car power supply (30, 30'),
place each removed power source (32) in a selected location on the exchange station (40) where the capacity of the power source (32) can be increased above the selected level,
select the replacement power source (32) from the exchange station (40) for each removed power source (32), and
place each replacement power source (32) into a position on the elevator car power supply (30, 30') previously occupied by the corresponding removed power source (32).

4. The elevator system (20) of any preceding claim, comprising:
a capacity detector (44) that detects the capacity of each of the power sources (32) of the elevator car power supply (30, 30') and provides an indication regarding the detected capacity, and
a controller (46) that controls when the exchange station (40) removes the selected number of power sources (32) from the elevator car power supply (30, 30').

5. The elevator system (20) of claim 4, comprising a vertical motion and dispatching controller (48) that receives an indication from at least one of the capacity detector (44) and the controller (46), wherein the vertical motion and dispatching controller (48) directs the elevator car (22, 22') to travel to the exchange station (40) when the indication from the capacity detector (44) corresponds to a need to remove and replace the selected number of the power sources (32).

6. The elevator system (20) of any preceding claim, wherein
the elevator car (22) includes a top, a bottom, and sides between the top and the bottom; and
the elevator car power supply (30) is supported on at least one of the sides of the elevator car (22); and, optionally, wherein:
the elevator car (22) is cantilevered on one of the sides, and
the elevator car power supply (30) is supported on the one of the sides.

7. The elevator system (20) of any preceding claim, wherein the elevator car (22) includes a cab (28) and the elevator car power supply (30) is situated beneath the cab (28).

8. The elevator system (20) of any preceding claim, comprising:
a counterweight (90), and
a load bearing assembly (92) coupling the elevator car (22') to the counterweight (90),
wherein
the elevator car power supply (30') is supported on the counterweight (90), and
the elevator system (20) includes at least one electrically conductive connection between the elevator car power supply (30') and the elevator car (22').

9. A method, comprising:
controlling movement of a plurality of elevator cars (22, 22', 70) of an elevator system according to any of claims 1 to 8, along a path, wherein an elevator car power supply (30, 30') moves with each elevator car (22, 22', 70), the respective power supply (30, 30') including a plurality of power sources (32);
determining that at least one of the plurality of power sources (32) has a capacity below a selected level;
causing at least one elevator car (22, 22', 70) of the plurality of elevator cars to move along a horizontal transition path extending between a plurality of vertical paths such that the elevator car power supply (30, 30') is adjacent an exchange station (40), the exchange station being located on the horizontal transition path extending between the plurality of vertical paths;
removing, from the elevator car power supply (30, 30'), a selected number of the power sources (32) that have the capacity below the selected level; and
replacing each of the removed number of the power sources (32) with a replacement power source (32) having a capacity above the selected level.

10. The method of claim 9, wherein
the elevator car (22) includes a top, a bottom, and sides between the top and the bottom; and
the elevator car power supply (30) is supported on at least one of the sides of the elevator car (22); and, optionally, wherein:
the elevator car (22) is cantilevered on one of the sides, and
the elevator car power supply (30) is supported on the one of the sides.

11. The method of claim 9 or 10, wherein the elevator car (22) includes a cab (28) and the elevator car power supply (30) is situated beneath the cab (28).

12. The method of any of claims 9 to 11, comprising supporting the elevator car power supply (30') on a counterweight (90) coupling with the elevator car (22'), wherein at least one electrically conductive member connects the elevator car power supply (30') and the elevator car (22').

## Patentansprüche

1. Aufzugsanlage (20), umfassend:
eine Aufzugkabine (22, 22'), die zur Bewegung entlang eines Wegs konfiguriert ist;
eine Aufzugkabinen-Stromversorgung (30, 30'), die zur Bewegung mit der Aufzugkabine (22, 22') gelagert ist, wobei die Stromversorgung (30, 30') eine Vielzahl von Stromquellen (32) beinhaltet; und
eine Wechselstation (40) in der Nähe des Wegs und dazu konfiguriert,
eine ausgewählte Anzahl der Stromquellen (32), deren Kapazität unter einem ausgewählten Niveau liegt, aus der Aufzugkabinen-Stromversorgung (30, 30') zu entfernen und
jede der entfernten Anzahl der Stromquellen (32) durch eine Ersatzstromquelle (32), die eine Kapazität über dem ausgewählten Niveau aufweist, zu ersetzen;
**dadurch gekennzeichnet, dass**
die Aufzugsanlage (20) ferner Folgendes umfasst:
eine zweite Aufzugkabine (70); und
eine zweite Aufzugkabinen-Stromversorgung (30, 30'), die zur Bewegung mit der zweiten Aufzugkabine (70) gelagert ist, wobei die zweite Aufzugkabinen-Stromversorgung (30, 30') eine Vielzahl von Stromquellen (32) beinhaltet;
wobei
die Wechselstation (40) dazu konfiguriert ist,
eine ausgewählte Anzahl der Stromquellen (32), deren Kapazität unter dem ausgewählten Niveau liegt, aus der zweiten Aufzugkabinen-Stromversorgung (30, 30') zu entfernen und
jede der entfernten Anzahl der Stromquellen (32) durch eine Ersatzstromquelle (32), die eine Kapazität über dem ausgewählten Niveau aufweist, zu ersetzen;
wobei die Aufzugsanlage eine Vielzahl von vertikalen Wegen (74, 76, 78) und mindestens einen horizontalen Übergangsweg (80) umfasst, der sich zwischen den vertikalen Wegen (74, 76, 78) erstreckt, wobei
die Aufzugkabinen-Stromversorgung (30) an der Aufzugkabine (22) gelagert ist,
die zweite Aufzugkabinen-Stromversorgung (30) an der zweiten Aufzugkabine (70) gelagert ist,
die Aufzugkabine (22) und die zweite Aufzugkabine (70) jeweils dazu konfiguriert sind, sich entlang des horizontalen Übergangswegs (80) zu bewegen, und
die Wechselstation (40) sich an einer Stelle befindet, um die ausgewählte Anzahl von Stromquellen (32) zu entfernen und zu ersetzen, während sich die Aufzugkabine (22) oder die zweite Aufzugkabine (70) an einer entsprechenden Stelle entlang des horizontalen Übergangspfads (80) befindet.

2. Aufzugsanlage (20) nach Anspruch 1, wobei
die Aufzugkabinen-Stromversorgung (30, 30') ein Gestell (50) beinhaltet,
jede der Stromquellen (32) mindestens teilweise durch ein Fach (52) des Gestells (50) aufgenommen ist und
jedes Fach (52) eine Schnittstelle umfasst, die dazu konfiguriert ist, eine elektrisch leitfähige Verbindung mit der durch das Fach (52) aufgenommenen Stromquelle (32) herzustellen; und wobei optional:
jedes Fach (52) eine Halterung beinhaltet, die dazu konfiguriert ist, die Stromquelle (32) relativ zu dem Fach (52) zu befestigen, um die elektrisch leitfähige Verbindung mit der Stromquelle (32) aufrechtzuerhalten.

3. Aufzugsanlage (20) nach Anspruch 1 oder 2, wobei die Wechselstation (40) mindestens eine Kopplungsvorrichtung umfasst, die dazu konfiguriert ist,
die ausgewählte Anzahl von Stromquellen (32), deren Kapazität unter dem ausgewählten Niveau liegt, aus der Aufzugkabinen-Stromversorgung (30, 30') zu entfernen,
jede entfernte Stromquelle (32) an einer ausgewählten Stelle an der Wechselstation (40) zu platzieren, wo die Kapazität der Stromquelle (32) über das ausgewählte Niveau erhöht werden kann, für jede entfernte Stromquelle (32) die Ersatzstromquelle (32) aus der Wechselstation (40) auszuwählen und
jede Ersatzstromquelle (32) in einer Position an der Aufzugkabinen-Stromversorgung (30, 30') zu platzieren, die zuvor durch die entsprechende entfernte Stromquelle (32) besetzt war.

4. Aufzugsanlage (20) nach einem der vorhergehenden Ansprüche, umfassend:
einen Kapazitätsdetektor (44), der die Kapazität jeder der Stromquellen (32) der Aufzugkabinen-Stromversorgung (30, 30') detektiert und eine Angabe bezüglich der detektierten Kapazität bereitstellt, und
eine Steuerung (46), die steuert, wann die Wechselstation (40) die ausgewählte Anzahl von Stromquellen (32) aus der Aufzugkabinen-Stromversorgung (30, 30') entfernt.

5. Aufzugsanlage (20) nach Anspruch 4, umfassend eine Vertikalbewegungs- und Entsendesteuerung (48), die eine Angabe von mindestens einem von dem Kapazitätsdetektor (44) und der Steuerung (46) empfängt, wobei die Vertikalbewegungs- und Entsendesteuerung (48) die Aufzugkabine (22, 22') anweist, zu der Wechselstation (40) zu fahren, wenn die Angabe von dem Kapazitätsdetektor (44) einer Notwendigkeit entspricht, die ausgewählte Anzahl der Stromquellen (32) zu entfernen und zu ersetzen.

6. Aufzugsanlage (20) nach einem der vorhergehenden Ansprüche, wobei
die Aufzugkabine (22) eine Oberseite, eine Unterseite und Seiten zwischen der Oberseite und der Unterseite beinhaltet; und
die Aufzugkabinen-Stromversorgung (30) an mindestens einer der Seiten der Aufzugkabine (22) gelagert ist; und wobei optional: die Aufzugkabine (22) auf einer der Seiten freitragend ist und die Aufzugkabinen-Stromversorgung (30) an einer der Seiten gelagert ist.

7. Aufzugsanlage (20) nach einem der vorhergehenden Ansprüche, wobei die Aufzugkabine (22) ein Fahrerhaus (28) beinhaltet und sich die Aufzugkabinen-Stromversorgung (30) unter dem Fahrerhaus (28) befindet.

8. Aufzugsanlage (20) nach einem der vorhergehenden Ansprüche, umfassend:
ein Gegengewicht (90) und
eine lasttragende Baugruppe (92), welche die Aufzugkabine (22') an das Gegengewicht (90) koppelt,
wobei
die Aufzugkabinen-Stromversorgung (30') an dem Gegengewicht (90) gelagert ist und
die Aufzugsanlage (20) mindestens eine elektrisch leitfähige Verbindung zwischen der Aufzugkabinen-Stromversorgung (30') und der Aufzugkabine (22') beinhaltet.

9. Verfahren, umfassend:
Steuern der Bewegung einer Vielzahl von Aufzugkabinen (22, 22', 70) einer Aufzugsanlage nach einem der Ansprüche 1 bis 8 entlang eines Wegs, wobei sich eine Aufzugkabinen-Stromversorgung (30, 30') mit jeder Aufzugkabine (22, 22', 70) bewegt, wobei die jeweilige Stromversorgung (30, 30') eine Vielzahl von Stromquellen (32) beinhaltet;
Bestimmen, dass mindestens eine der Vielzahl von Stromquellen (32) eine Kapazität unter einem ausgewählten Niveau aufweist;
Bewirken, dass sich mindestens eine Aufzugkabine (22, 22', 70) der Vielzahl von Aufzugkabinen entlang eines horizontalen Übergangswegs bewegt, der sich zwischen einer Vielzahl von vertikalen Wegen erstreckt, sodass sich die Aufzugkabinen-Stromversorgung (30, 30') benachbart zu einer Wechselstation (40) befindet, wobei sich die Wechselstation auf dem horizontalen Übergangsweg befindet, der sich zwischen der Vielzahl von vertikalen Wegen erstreckt;
Entfernen einer ausgewählten Anzahl der Stromquellen (32), deren Kapazität unter dem ausgewählten Niveau liegt, aus der Aufzugkabinen-Stromversorgung (30, 30'); und
Ersetzen jeder der entfernten Anzahl der Stromquellen (32) durch eine Ersatzstromquelle (32), die eine Kapazität über dem ausgewählten Niveau aufweist.

10. Verfahren nach Anspruch 9, wobei
die Aufzugkabine (22) eine Oberseite, eine Unterseite und Seiten zwischen der Oberseite und der Unterseite beinhaltet; und
die Aufzugkabinen-Stromversorgung (30) an mindestens einer der Seiten der Aufzugkabine (22) gelagert ist; und wobei optional: die Aufzugkabine (22) auf einer der Seiten freitragend ist und die Aufzugkabinen-Stromversorgung (30) an einer der Seiten gelagert ist.

11. Verfahren nach Anspruch 9 oder 10, wobei die Aufzugkabine (22) ein Fahrerhaus (28) beinhaltet und sich die Aufzugkabinen-Stromversorgung (30) unter dem Fahrerhaus (28) befindet.

12. Verfahren nach einem der Ansprüche 9 bis 11, umfassend Lagern der Aufzugkabinen-Stromversorgung (30') an einem Gegengewicht (90), das mit der Aufzugkabine (22') gekoppelt ist, wobei mindestens ein elektrisch leitfähiges Element die Aufzugkabinen-Stromversorgung (30') und die Aufzugkabine (22') verbindet.

## Revendications

1. Système d'ascenseur (20), comprenant :
une cabine d'ascenseur (22, 22') qui est configurée pour un mouvement le long d'un trajet ;
une fourniture d'alimentation électrique de cabine d'ascenseur (30, 30') supportée pour un mouvement avec la cabine d'ascenseur (22, 22'), la fourniture d'alimentation électrique (30, 30') comportant une pluralité de sources d'alimentation électrique (32) ; et
une station d'échange (40) à proximité du trajet et configurée pour
retirer, de la fourniture d'alimentation électrique de cabine d'ascenseur (30, 30'), un nombre sélectionné de sources d'alimentation électrique (32) qui ont une capacité inférieure à un niveau sélectionné et
remplacer chaque source du nombre retiré des sources d'alimentation électrique (32) par une source d'alimentation électrique de remplacement (32) ayant une capacité supérieure au niveau sélectionné ;
**caractérisé en ce que**
le système d'ascenseur (20) comprenant également :
une seconde cabine d'ascenseur (70) ; et
une fourniture d'alimentation électrique de seconde cabine d'ascenseur (30, 30') supportée pour un mouvement avec la seconde cabine d'ascenseur (70), la fourniture d'alimentation électrique de seconde cabine d'ascenseur (30, 30') comportant une pluralité de sources d'alimentation électrique (32),
dans lequel
la station d'échange (40) est configurée pour
retirer, de la fourniture d'alimentation électrique de seconde cabine d'ascenseur (30, 30'), un nombre sélectionné de sources d'alimentation électrique (32) qui ont une capacité inférieure au niveau sélectionné et
remplacer chaque source du nombre retiré des sources d'alimentation électrique (32) par une source d'alimentation électrique de remplacement (32) ayant une capacité supérieure au niveau sélectionné ;
dans lequel le système d'ascenseur comprend une pluralité de trajets verticaux (74, 76, 78) et au moins un trajet de transition horizontal (80) se prolongeant entre les trajets verticaux (74, 76, 78), dans lequel
la fourniture d'alimentation électrique de cabine d'ascenseur (30) est supportée sur la cabine d'ascenseur (22), la fourniture d'alimentation électrique de seconde cabine d'ascenseur (30) est supportée sur la seconde cabine d'ascenseur (70),
la cabine d'ascenseur (22) et la seconde cabine d'ascenseur (70) sont chacune configurées pour se mettre en mouvement le long du trajet de transition horizontal (80), et
la station d'échange (40) est dans un emplacement pour retirer et remplacer le nombre sélectionné de sources d'alimentation électrique (32) tandis que la cabine d'ascenseur (22) ou la seconde cabine d'ascenseur (70) est à un emplacement correspondant le long du trajet de transition horizontal (80).

2. Système d'ascenseur (20) selon la revendication 1, dans lequel
la fourniture d'alimentation électrique de cabine d'ascenseur (30, 30') comporte un bâti (50),
chacune des sources d'alimentation électrique (32) est au moins partiellement reçue par un compartiment (52) du bâti (50), et
chaque compartiment (52) comporte une interface qui est configurée pour établir une connexion électriquement conductrice avec la source d'alimentation électrique (32) reçue par le compartiment (52) ; et, éventuellement, dans lequel :
chaque compartiment (52) comporte un dispositif de retenue qui est configuré pour sécuriser la source d'alimentation électrique (32) par rapport au compartiment (52) pour maintenir la connexion électriquement conductrice avec la source d'alimentation électrique (32).

3. Système d'ascenseur (20) selon la revendication 1 ou 2, dans lequel la station d'échange (40) comporte au moins un dispositif d'accouplement configuré pour
retirer le nombre sélectionné de sources d'alimentation électrique (32) qui ont la capacité inférieure au niveau sélectionné de la fourniture d'alimentation électrique de cabine d'ascenseur (30, 30'),
placer chaque source d'alimentation électrique (32) retirée dans un emplacement sélectionné sur la station d'échange (40) où la capacité de la source d'alimentation électrique (32) peut être augmentée au-dessus du niveau sélectionné,
sélectionner la source d'alimentation électrique de remplacement (32) à partir de la station d'échange (40) pour chaque source d'alimentation électrique (32) retirée, et
placer chaque source d'alimentation électrique de remplacement (32) dans une position sur la fourniture d'alimentation électrique de cabine d'ascenseur (30, 30') précédemment occupée par la source d'alimentation électrique (32) retirée correspondante.

4. Système d'ascenseur (20) selon une quelconque revendication précédente, comprenant :
un détecteur de capacité (44) qui détecte la capacité de chacune des sources d'alimentation électrique (32) de la fourniture d'alimentation électrique de cabine d'ascenseur (30, 30') et fournit une indication concernant la capacité détectée, et
un contrôleur (46) qui contrôle le moment où la station d'échange (40) retire le nombre sélectionné de sources d'alimentation électrique (32) de la fourniture d'alimentation électrique de cabine d'ascenseur (30, 30').

5. Système d'ascenseur (20) selon la revendication 4, comprenant un contrôleur de mouvement vertical et de répartition (48) qui reçoit une indication d'au moins l'un du détecteur de capacité (44) et du contrôleur (46), dans lequel le contrôleur de mouvement vertical et de répartition (48) ordonne à la cabine d'ascenseur (22, 22') de se déplacer vers la station d'échange (40) lorsque l'indication du détecteur de capacité (44) correspond à un besoin de retirer et de remplacer le nombre sélectionné de sources d'alimentation électrique (32).

6. Système d'ascenseur (20) selon une quelconque revendication précédente, dans lequel
la cabine d'ascenseur (22) comporte un dessus, un dessous et des côtés entre le dessus et le dessous ; et
la fourniture d'alimentation électrique de cabine d'ascenseur (30) est supportée sur au moins l'un des côtés de la cabine d'ascenseur (22) ; et, éventuellement, dans lequel :
la cabine d'ascenseur (22) est en porte-à-faux sur l'un des côtés, et
la fourniture d'alimentation électrique de cabine d'ascenseur (30) est supportée sur l'un des côtés.

7. Système d'ascenseur (20) selon une quelconque revendication précédente, dans lequel la cabine d'ascenseur (22) comporte une cabine (28) et la fourniture d'alimentation électrique de cabine d'ascenseur (30) est située sous la cabine (28).

8. Système d'ascenseur (20) selon une quelconque revendication précédente, comprenant :
un contrepoids (90), et
un ensemble porteur de charge (92) accouplant la cabine d'ascenseur (22') au contrepoids (90),
dans lequel
la fourniture d'alimentation électrique de cabine d'ascenseur (30') est supportée sur le contrepoids (90), et
le système d'ascenseur (20) comporte au moins une connexion électriquement conductrice entre la fourniture d'alimentation électrique de cabine d'ascenseur (30') et la cabine d'ascenseur (22').

9. Procédé, comprenant :
le contrôle d'un mouvement d'une pluralité de cabines d'ascenseur (22, 22', 70) d'un système d'ascenseur selon l'une quelconque des revendications 1 à 8, le long d'un trajet, dans lequel une fourniture d'alimentation électrique de cabine d'ascenseur (30, 30') se met en mouvement avec chaque cabine d'ascenseur (22, 22', 70), la fourniture d'alimentation électrique (30, 30') respective comportant une pluralité de sources d'alimentation électrique (32) ;
la détermination qu'au moins l'une de la pluralité de sources d'alimentation électrique (32) a une capacité inférieure à un niveau sélectionné ;
le fait d'amener au moins une cabine d'ascenseur (22, 22', 70) de la pluralité de cabines d'ascenseur à entrer en mouvement le long d'un trajet de transition horizontal se prolongeant entre une pluralité de trajets verticaux de telle sorte que la fourniture d'alimentation électrique de cabine d'ascenseur (30, 30') est adjacente à une station d'échange (40), la station d'échange étant située sur le trajet de transition horizontal se prolongeant entre la pluralité de trajets verticaux ;
le retrait, de la fourniture d'alimentation électrique de cabine d'ascenseur (30, 30'), d'un nombre sélectionné de sources d'alimentation électrique (32) qui ont la capacité inférieure au niveau sélectionné ; et
le remplacement de chaque source du nombre retiré des sources d'alimentation électrique (32) par une source d'alimentation électrique de remplacement (32) ayant une capacité supérieure au niveau sélectionné.

10. Procédé selon la revendication 9, dans lequel
la cabine d'ascenseur (22) comporte un dessus, un dessous, et des côtés entre le dessus et le dessous ; et
la fourniture d'alimentation électrique de cabine d'ascenseur (30) est supportée sur au moins l'un des côtés de la cabine d'ascenseur (22) ; et, éventuellement, dans lequel :
la cabine d'ascenseur (22) est en porte-à-faux sur l'un des côtés, et
la fourniture d'alimentation électrique de cabine d'ascenseur (30) est supportée sur l'un des côtés.

11. Procédé selon la revendication 9 ou 10, dans lequel la cabine d'ascenseur (22) comporte une cabine (28) et la fourniture d'alimentation électrique de cabine d'ascenseur (30) est située sous la cabine (28).

12. Procédé selon l'une quelconque des revendications 9 à 11, comprenant le support de la fourniture d'alimentation électrique de cabine d'ascenseur (30') sur un contrepoids (90) accouplé à la cabine d'ascenseur (22'), dans lequel au moins un élément électriquement conducteur connecte la fourniture d'alimentation électrique de cabine d'ascenseur (30') et la cabine d'ascenseur (22').
